(19) Europäisches Patentamt
European Patent Office
Office européen des brevets

(11) Veröffentlichungsnummer: **0 269 648 B1**

(12) # EUROPÄISCHE PATENTSCHRIFT

(45) Veröffentlichungstag der Patentschrift:
13.11.91 Patentblatt 91/46

(51) Int. Cl.⁵: **B60S 1/08**

(21) Anmeldenummer: **87902420.6**

(22) Anmeldetag: **06.05.87**

(86) Internationale Anmeldenummer:
**PCT/DE87/00199**

(87) Internationale Veröffentlichungsnummer:
**WO 87/06898 19.11.87 Gazette 87/25**

(54) **SCHALTANORDNUNG FÜR WENIGSTENS EINEN ELEKTRISCHEN VERBRAUCHER EINES KRAFTFAHRZEUGES.**

(30) Priorität: 07.05.86 DE 3615531

(43) Veröffentlichungstag der Anmeldung:
08.06.88 Patentblatt 88/23

(45) Bekanntmachung des Hinweises auf die
Patenterteilung:
13.11.91 Patentblatt 91/46

(84) Benannte Vertragsstaaten:
FR GB IT

(56) Entgegenhaltungen:
DE-A- 3 008 580
DE-A- 3 047 453

(73) Patentinhaber: **SWF Auto-Electric GmbH**
**Stuttgarter Strasse 119 Postfach 135**
**W-7120 Bietigheim-Bissingen (DE)**

(72) Erfinder: **GILLE, Günther**
**Danziger Weg 9**
**W-7126 Sersheim (DE)**
Erfinder: **GOERTLER, Horst**
**Metterzimmerer Str. 12**
**W-7123 Sachsenheim 2 (DE)**
Erfinder: **RACHNER, Horst**
**Weingartweg 8**
**W-7120 Bietigheim-Bissingen (DE)**

## Beschreibung

Die Erfindung bezieht sich auf eine Schaltanordnung für wenigstens einen elektrischen Verbraucher eines Kraftfahrzeuges gemäß den Merkmalen des Oberbegriffs des Anspruchs 1.

Die Anzahl der Verbraucher oder die Anzahl der Betriebsarten einzelner Verbraucher in einem Kraftfahrzeug hat in jüngster Zeit erheblich zugenommen. Beispielsweise sind für den Wischermotor einer Scheibenreinigungsanlage eines Kraftfahrzeuges meist vier Betriebsarten vorgesehen, nämlich eine Betriebsart zum Parkstellungslauf des Wischermotors, eine Betriebsart mit langsamer Wischgeschwindigkeit, eine Betriebsart mit schneller Wischgeschwindigkeit sowie eine sogenannte Intervallbetriebsart, bei der der Wischermotor nach jedem Wischzyklus für eine definierte Zeitspanne stillgesetzt wird. Bei manchen Scheibenreinigungsanlagen ist dabei diese definierte Intervallzeit fest und unveränderbar vorgegeben. Bei anderen Scheibenreinigungsanlagen kann die Intervallzeit stufenlos über ein Potentiometer verstellt werden.

Denkbar ist auch eine Ausführung, bei der diese Intervallzeit in mehreren Stufen veränderbar ist, wobei dann anstelle des Potentiometers unterschiedliche Festwiderstände einem Zeitglied zugeschaltet werden. Bei einer solchen Scheibenreinigungsanlage sind also auch mehrere unterschiedliche Intervallbetriebsarten über den Betriebsschalter einstellbar. Bei einem solchen System hat der Betriebsschalter also mehrere Schaltstellungen für die einzelnen Betriebsarten, wobei die unterschiedlichen Schaltsignale dieses Betriebsschalters dann einem Programmgeber zugeführt werden, der die vom Betriebsschalter vorgegebene Betriebsart festlegt. Bei den heute serienmäßigen Scheibenreinigungsanlagen benötigt man zur Übertragung der Schaltsignale des Betriebsschalter zu dem Programmgeber ein aufwendiges Kabel mit einer Anzahl von Schaltsignalübertragungsstrecken oder Leitungen, die der Anzahl der unterschiedlichen Betriebsarten entspricht. Es ist leicht einzusehen, daß der Aufwand für dieses Kabel mit der Anzahl der unterschiedlichen Betriebsarten wächst. Um diesen Aufwand zu reduzieren, wurden bereits Schaltanordnungen vorgeschlagen, bei denen durch den Betriebsschalter in den einzelnen Betriebsschaltstellungen unterschiedliche Spannungspegel auf eine Schaltsignalübertragungsstrecke oder Leitung aufgeschaltet werden, wobei dann der Programmgeber einen Detektor mit diesen unterschiedlichen Spannungspegeln zugeordneten Detektionsbereichen aufweist und entsprechend dem jeweiligen Spannungspegel die Betriebsart festlegt. Eine solche Schaltanordnung mit nur einer Schaltsignalübertragungsstrecke zwischen dem Betriebsschalter und dem Programmgeber ist beispielsweise aus der DE-OS 29 44 224 oder der DE-OS 30 08 580 bekannt. Mit einer solchen Ausführung kann also der Verdrahtungsaufwand zwischen dem Betriebsschalter und dem Programmgeber wesentlich reduziert werden. Allerdings hat sich gezeigt, daß eine solche Schaltanordnung nicht in allen Fällen betriebssicher arbeitet. Das liegt beispielsweise daran, daß bei einem Kurzschluß der Schaltsignalübertragungsstrecke bzw. des Eingangs des Programmgebers mit dem einen oder anderen Pol der den Verbraucher speisenden Spannungsquelle am Eingang des Programmgebers ein Spannungspegel anliegt, der mit einem Spannungspegel bei einer gewünschten Betriebsart übereinstimmt. Das kann zur Folge haben, daß die Scheibenreinigungsanlage unbeabsichtigt in Betrieb gesetzt oder eine bestimmte Betriebsart eingeschaltet wird. Ein ähnlicher Fehler kann auch während des Umschaltens des Betriebsschalters von einer Betriebsart in die andere Betriebsart auftreten, weil während dieser Zeitspanne vom Betriebsschalter kein definiertes Potential auf die Leitung zum Programmgeber aufgeschaltet wird.

Der vorliegenden Erfindung liegt also die Aufgabe zugrunde, die Betriebssicherheit bei einer solchen Schaltanordnung zu verbessern.

Diese Aufgabe wird erfindungsgemäß mit den Merkmalen des Anspruchs 1 gelöst.

Der Erfindung liegt dabei die Erkenntnis zugrunde, daß man fehlerhafte Zustände, also beispielsweise Kurzschlüsse, oder auch solche Zustände, die zwangsläufig auftreten, aber keiner gewünschten Betriebsart zugeordnet werden sollen, dann eindeutig erkennen und auswerten kann, wenn man den Detektor des Programmgebers so ausbildet, daß er neben den Detektionsbereichen für die einzelnen unterschiedlichen Betriebsarten wenigstens einen zusätzlichen Detektionsbereich für ein Schaltsignal aufweist, das von den Schaltsignalen in den Betriebsstellungen des Betriebsschalters abweicht. Während also bei der bekannten Ausführung nach der DE-OS 29 44 224 der Detektor nur eine Anzahl von Detektionsbereichen aufweist, die mit der Anzahl der möglichen Betriebsarten oder Schaltstellungen des Betriebsschalters übereinstimmt, soll bei der erfindungsgemäßen Ausführung die Anzahl der Detektionsbereiche des Detektors vergrößert werden. Außerdem wird dafür gesorgt, daß bei den genannten Störfällen auf der Schaltsignalübertragungsstrecke ein Spannungspegel meßbar ist, der außrhalb der Detektionsbereiche der bei den gewünschten Betriebsarten eingestellten Spannungspegel liegt. Oer Programmgeber mit dem Detektor kann also Störfälle eindeutig von den normalen Betriebsfällen unterscheiden und dann entsprechende Steuersignale auslösen, etwa das ganze System abschalten.

Die Erfindung und deren vorteilhafte Ausgestaltungen werden nachstehend anhand der in der Zeichnung dargestellten Ausführungsbeispiele näher erläutert. Es zeigen:

Fig. 1 ein Prinzipschaltbild einer ersten Schaltanordnung,

Fig. 2 ein Prinzipschaltbild eines Detektors,

Fig. 3 ein Prinzipschaltbild eines zweiten Ausführungsbeispieles und

Fig. 4 ein Prinzipschaltbild zu einer dritten Ausführung.

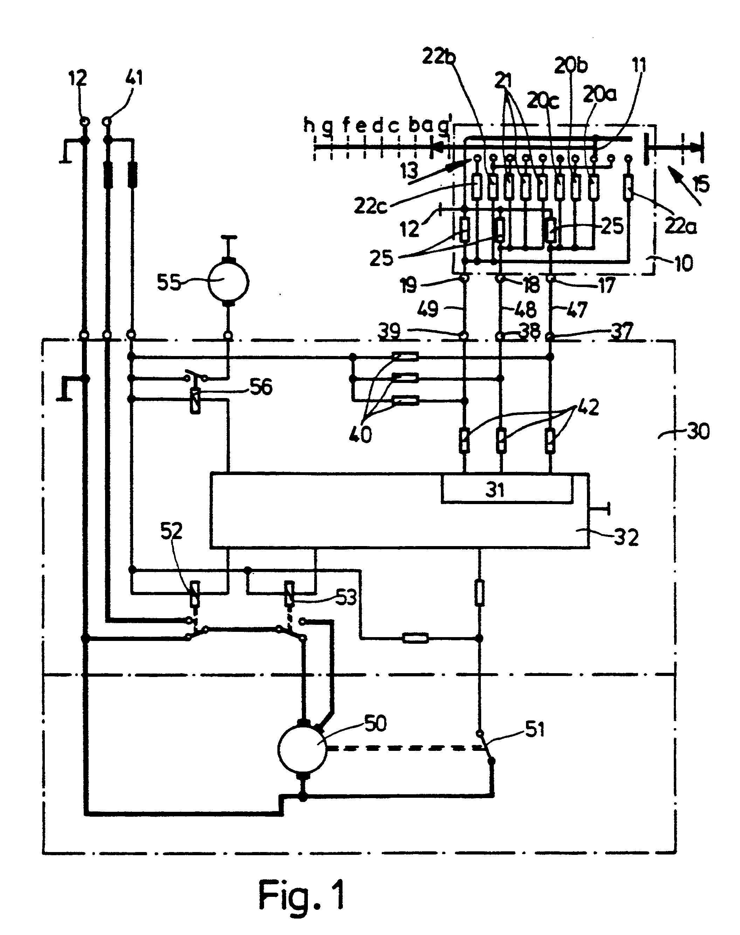

Fig. 1 zeigt das Prinzipschaltbild für eine Scheibenreinigungsanlage eines Kraftfahrzeuges. Zu dieser Schaltanordnung gehört ein Betriebsschalter 10 mit einer manuell verstellbaren Schaltbrüke 11 zur Festlegung unterschiedlicher Betriebsarten der Scheibenreinigungsanlage. Diese Schaltbrüke 11 ist dauernd mit dem ersten Pol 12 einer nicht näher dargestellten Spannungsquelle verbunden, der auch an die Karosserie des Kraftfahrzeuges angeschlossen ist. In den einzelnen Schaltstellungen a bis h stellt diese Schaltbrücke 11 eine leitende Verbindung zwischen diesem Pol 12 der Spannungsquelle und einem der Festkontakte 13 her. In Fig. 1 ist die Neutralstellung dieses Betriebsschalters 10 dargestellt. Bei einer Verstellung der Schaltbrüke 11 nach links in die Schaltstellungen b bis f soll jeweils ein Intervallbetrieb der Scheibenreinigungsanlage mit unterschiedlichen Intervallzeiten eingestellt werden. In der Schaltstellung g soll Dauerbetrieb mit geringer Wischgeschwindigkeit und in der Schaltstellung h Dauerbetrieb mit großer Wischgeschwindigkeit eingestellt werden. In der Neutralstellung a wird die Betriebsart "Parkstellungslauf" eingeschaltet, d.h. der Wischer soll in seine Parkstellung laufen und dann abgeschaltet werden. Außerdem ist noch eine Schaltstellung g' rechts der Neutralstellung vorgesehen, bei der der sogenannte Tipp-Wischbetrieb eingeschaltet werden soll. Nur der Vollständigkeit halber wird darauf hingewiesen, daß der Betriebsschalter 10 außerdem eine Waschtaste 15 aufweist, über die ebenfalls eine bestimmte Betriebsart der Scheibenwischanlage eingeschaltet wird, wobei jedoch zusätzlich auch die Waschanlage in Betrieb gesetzt wird.

Aus Fig. 1 geht hervor, daß mehrere Festkontakte 13 jeweils über unterschiedliche Widerstände mit dem gleichen Ausgang 17, 19 oder 19 des Betriebsschalters verbunden sind. In den Schaltstellungen a,b,c wird also jeweils eine elektrisch leitende Verbindung zwischen dem einen Pol 12 der Spannungsquelle und einem der Widerstände 20 a, 20 b oder 20 c mit dem Ausgang 17 hergestellt. In den Schaltstellungen d,e,f, wird entsprechend einer der Widerstände 21 auf den Ausgang 18 aufgeschaltet. in den Schaltstellungen g,h wird einer der Widerstände 22 b,c auf den Ausgang 19 aufgeschaltet und bei Betätigung der Waschtaste 15 wird ein Widerständ 22 a ebenfalls auf diesen Ausgang 19 aufgeschaltet. Die Widerstände 20 a, 21 a und 22 a sind jeweils gleich groß. Die drei an einem Ausgang angeschlossenen Widerstände 20 a, 20 b und 20 c haben jedoch unterschiedliche Widerstandswerte etwa im Verhältnis 1 zu 3 zu 9.

Außerdem geht aus dem Schaltbild nach Fig. 1 noch hervor, daß jeder der Ausgänge 17, 18, 19 über einen zugeordneten Widerstand 25 mit dem Pol 12 der Spannungsquelle verbunden ist. Über diesen Widerstand 25 wird der zugeordnete Ausgang auf einem bestimmten Spannungspegel gehalten, wenn die Schaltbrücke 11 des Betriebsschalters auf keinem Festkontakt 13 aufliegt.

Schließlich geht aus dem Schaltbild noch hervor, daß in den Schaltstellungen g bzw. g' der gleiche Widerstand 22 b in den Stromkreis eingeschleift wird. Diese Schaltstellungen sind also elektrisch gleichwertig, unterscheiden sich jedoch mechanisch dadurch, daß die Schaltbrücke 11 in der Schaltstellung g verrastet, in der Schaltstellung g' aber nicht verrastet ist. Vielmehr federt die Schaltbrücke 11 aus der Schaltstellung g' selbsttätig in die Neutralstellung a zurück. An den Ausgängen des Betriebsschalters sind also codierte Schaltsignale abgreifbar, die sich beim vorliegenden Ausführungsbeispiel hinsichtlich des Spannungspegels unterscheiden.

Zu der Schaltanordnung gehört ein insgesamt mit 30 bezeichneter Programmgeber mit einem Detektor 31, der auf die unterschiedlich codierten Schaltsignale des Betriebsschalters anspricht und die zugeordnete Betriebsart festlegt. Dieser Detektor 31 ist in einem Mikroprozessor 32 bzw. Kunden-IC integriert. Die drei Eingänge 37,38 und 39 dieses Programmgebers sind über je einen Widerstand 40 mit dem anderen Pol 41 der Spannungsquelle verbunden. Mit 42 sind drei Schutzwiderstände bezeichnet.

Der Betriebsschalter 10 ist mit diesem Programmgeber 30 über drei Schaltsignalübertragungsstrecken 47, 48 und 49 verbunden. Als Schaltsignalübertragungsstrecken können im einfachsten Fall elektrische Leitungen dienen, doch könnte man die Schaltsignale des Betriebsschalters auch auf optischem oder akustischem Wege übertragen. Es ist also aus dem Schaltbild nach Fig. 1 erkennbar, daß die Anzahl dieser Schaltsignalübertragungsstrecken kleiner ist als die Anzahl der möglichen Betriebsschaltstellungen des Betriebsschalter. Bei der konkreten Ausführung nach Fig. 1 sind drei Schaltsignalübertragungsstrecken für insgesamt neun unterschiedliche Betriebsarten vorgesehen.

In dem Schaltbild nach Fig. 1 ist mit 50 als Verbraucher der Wischermotor einer Wischanlage bezeichnet, dem in an sich bekannter Weise ein sogenannter Parkstellungsschalter 51 zugeordnet ist. Dieser Wischermotor 50 wird über das Relais 52 wechselweise mit dem einen oder anderen Pol der Spannungsquelle verbunden. Das andere Relais 53 bestimmt dann, ob die Wischeranlage mit geringer oder mit höherer Wischgeschwindigkeit betrieben werden soll. Diese Schaltung zur Ansteuerung des Wischermotors 50 ist an sich bekannt und braucht daher nicht näher erläutert zu werden. Außerdem zeigt Fig. 1 einen weiteren Verbraucher 55, nämlich einen Waschpumpenmotor, der über das Relais 56 gesteuert wird. Oer Programmgeber 30 sorgt nun in Abhängigkeit von der Betriebsschaltstellung des Betriebsschalters 10 bzw. in Abhängigkeit von den Spannungspegeln an den Eingängen 37, 38, 39 dafür, daß die entsprechende Betriebsart des Verbrauchers 50 festgelegt und/oder der Verbraucher 55 eingeschaltet wird. Dazu werden in bekannter Weise entsprechende Steuersignale für die einzelnen Relais 52, 53, 56 zu bestimmten Zeitpunkten ausgelöst.

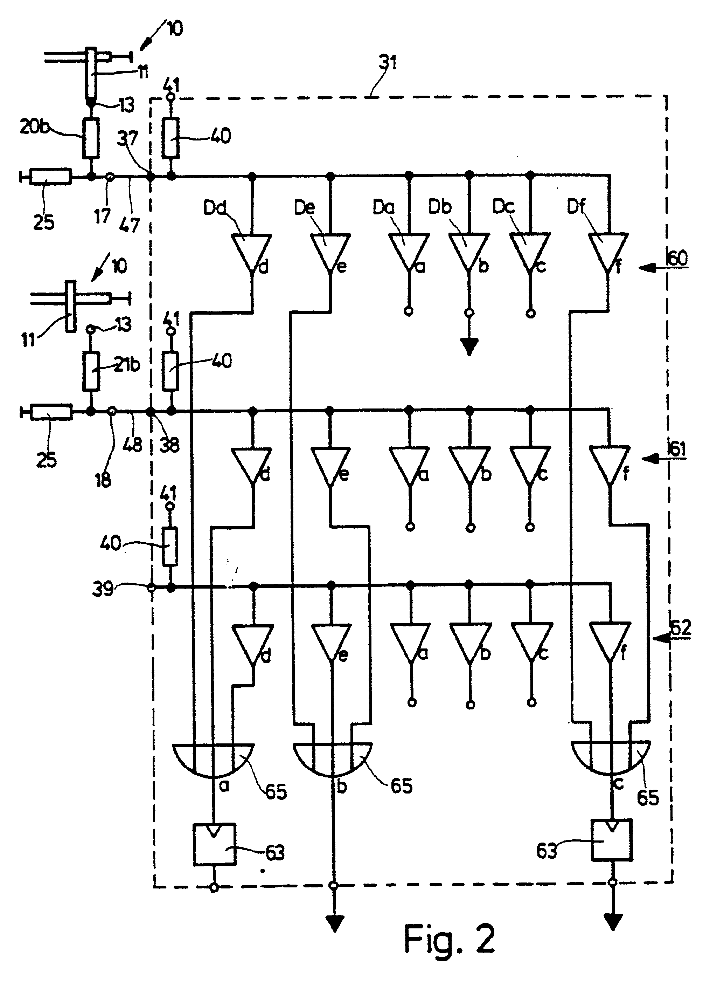

Zur Festlegung dieser Betriebsarten dient dabei der Detektor 31, dessen Prinzipschaltbild in Fig. 2 dargestellt ist. Zu diesem Detektor gehören mehrere Komparatoren 60, 61 oder 62. Die Komparatoren 60a, 60b, 60c, 60d, 60e und 60f sind alle an den Eingang 37 angeschlossen und werden also über den Spannungspegel auf der Schaltsignalübertragungsstrecke 47 bzw. am Ausgang 17 des Betriebsschalters 10 angesteuert. Die Komparatoren 61 liegen alle am Eingang 38, die Komperatoren 62 alle am Eingang 39. Jeder dieser Komparatoren wirkt in einem vorgegebenen Detektionsbereich. Beispielsweise ist am Ausgang des Komparators 60d ein Signal meßbar, wenn der Spannungspegel am Eingang 37 im Bereich von 0 Volt oder 0% der Spannung der Spannungsquelle liegt. Der Komparator 60e spricht an, wenn dieser Spannungspegel im Bereich von 20% der Versorgungsspannung liegt. Entsprechend lösen die Komparatoren 60a, 60b, 60c, und 60f ein Schaltsignal aus, wenn dieser Spannungspegel bei 40%, 60%, 80%, 100% der Versorgungsspannung liegt. Entsprechendes gilt auch für die Komparatoren 61 bzw. 62. Man bezeichnet diese Art der Signalerkennungskomparatoren auch als Fensterdiskriminatoren.

In dem Schaltbild nach Fig. 2 ist auch der Betriebsschalter 10 angedeutet, wobei zwei unterschiedliche Schaltstellungen der Schaltbrücke 11 erkennbar sind, die natürlich nicht gleichzeitig vorliegen können. Wenn die Schaltbrücke 11 auf einem der Festkontakte 13 aufliegt, soll am Eingang 37 des Programmgebers 30 ein Spannungspegel derart meßbar sein, daß einer der Komparatoren 60a, 60b, oder 60c anspricht. Dies wird durch entsprechende Bemessung der Widerstände 20, 25 und 40 erreicht. In der Schaltstellung a soll also der Komparator 60a, in der Schaltstellung b der Komparator 60b und in der Schaltstellung c der Komparator 60c ansprechen. Über die Ausgänge dieser Komparatoren wird dann die entsprechende Betriebsart, im vorliegenden Fall also die Intervallzeit im Intervallbetrieb festgelegt. Man erkennt also aus Fig. 2, daß der Detektor 31 drei Detektionsbereiche Da, Db, Dc aufweist, die einzelnen Betriebsarten zugeordnet sind, die über den entsprechenden Betriebsschalter bzw. die zugehörige Schaltsignalübertragungsstrecke 47 vorgebbar sind. Wesentlich für die vorliegende Erfindung ist nun, daß der Detektor neben diesen den einzelnen Betriebsarten zugeordneten Detektionsbereichen drei weitere Detektionsbereiche Dd, De und Df aufweist, die bei Schaltsignalen ansprechen, die keine gewünschte Betriebsart charakterisieren.

Befindet sich die Schaltbrücke 11 zwischen zwei Betriebsschaltstellungen, also beispielsweise zwischen den Schaltstellungen e und f, ändert sich der Spannungsteiler am Eingang 38, weil nun keiner der den Festkontakten 13 zugeordneten Widerstände 20, 21 oder 22 in den Stromkreis eingeschleift ist. In diesem Fall spricht nun keiner der Komparatoren 61a, 61b, 61c an, die den einzelnen Betriebsarten zugeorchnet sind, sondern es soll der Komparator 61e ansprechen. Der Detektor 31 hat also einen ersten Zusatzdetektionsbereich De für ein Schaltsignal oder einen Spannungspegel am Eingang des Detektors, der von den üblichen Schaltsignalen oder Spannungspegeln in den Betriebsschaltstellungen des Betriebsschalters 10 abweicht. Dieser zusätzliche erste Detektionsbereich De umfaßt Schaltsignale mit einem Spannungspegel von etwa 20% der Versorgungsspannung.

Bei einer solchen Schaltanordnung können nun auch Störfälle auftreten, denn die Schaltsignalübertragungsstrecke zu einem Eingang 39 könnte unterbrochen sein. In diesem Fall liegt über den Widerstand 40 an diesem Eingang die volle positive Versorgungsspannung an, worauf der Komparator 62f anspricht. Der Detektor 31 hat also einen zweiten Zusatzdetektionsbereich Df für einen spannungspegel, der von den üblichen Spannungspegeln in einer der Betriebsarten abweicht. Theoretisch könnte auch der Fall eintreten, daß die Schaltsignalübertragungsstrecke unmittelbar mit dem positiven Pol der Spannungsquelle verbunden wird. Auch in diesem Fall liegt die volle Versorgungsspannung am Eingang 39 an, und es soll wieder dieser Komparator 62 f ansprechen. Dieser zweite Zusatzdetektionsbereich Df des Detektors 31 dient also zur Erfassung zweier Fehlzustände.

Häufiger wird jedoch der Störfall eintreten, daß ein Kurzschluß gegenüber dem negativen Pol der Spannungsquelle auftritt. Dann liegt am Eingang 39 keine Spannung an und der Komparator 60d wird ansprechen. Es gibt also einen weiteren Zusatzdetektionsbereich Dd, der au f einen anderen Störfall ausgelegt ist.

Insgesamt ist also festzustellen, daß die Anzahl der Detektionsbereiche des Detektors größer ist als die Anzahl der vorgesehenen unterschiedlichen Betriebsarten. Bei dem in der Zeichnung dargestellten Ausführungsbeispiel gibt es für jede Schaltsignalübertragungsstrecke drei Detektionbereiche für vorgesehene Betriebsarten und drei Zusatzdetektionsbereiche. In zwei Zusatzdetektionsbereichen Dd, Df werden Störfälle, nämlich eine offene Schaltsignalübertragungsst recke bzw. Kurzschlüsse mit dem positiven oder negativen Pol der Spannungsquelle erfaßt, in einem weiteren Zusatzdetektionsbereich De wird festgestellt, ob die Schaltbrücke sich zwischen zwei Betriebsschaltstellungen befindet. Dies gilt bei dem konkreten Ausführungsbeispiel für jede Schaltsignalübertragungsstrecke, wobei die Ausgangssignale gleichwirkender komparatoren jeweils über ein ODER-Gatter 65a, b,c miteinander verkrüpft sind. Das Ausgangssignal dieser ODER-Gatter kann in unterschiedlicher Weise zur Steuerung augenutzt werden. In einem Störfall, also bei einem Kurzschluß oder bei offener Schaltsignalübertragungsstrecke, kann man das gesamte System über ein Zeitglied 63 verzögert abschalten. Am Ausgang des ODER-Gatters 65b erscheint ein Signal, wenn sich die Schaltbrürke 11 zwischen zwei Betriebsschaltstellungen befindet. In einem solchen Fall soll die bisherige Betriebsart beibehalten werden, sofern die Schaltsignaldauer eine bestimmte Zeitdauer nicht überschreitet. Ist dieses Schaltsignal mit einem Spannungspegel, der dem vom Komparator 20e, 21e, 22e erfaßten Detektionsbereich De entspricht, länger als eine vorgegebene Zeitdauer, wird vermutlich der Schalter defekt sein. Dann kann ebenfalls die Anlage abgeschaltet werden.

Bei dem Ausführungsbeispiel nach den Fig. 1 und 2 sind auf jeder Schaltsignalübertragungsstrecke sechs unterschiedliche Spannungspegel übertragbar und von den nachgeschalteten Komparatoren überwachbar. Davon sind drei den normalen Betriebsarten zugeordnet, während drei weitere komparatoren den Zusatzdetektionsbereichen zugeordnet sind.

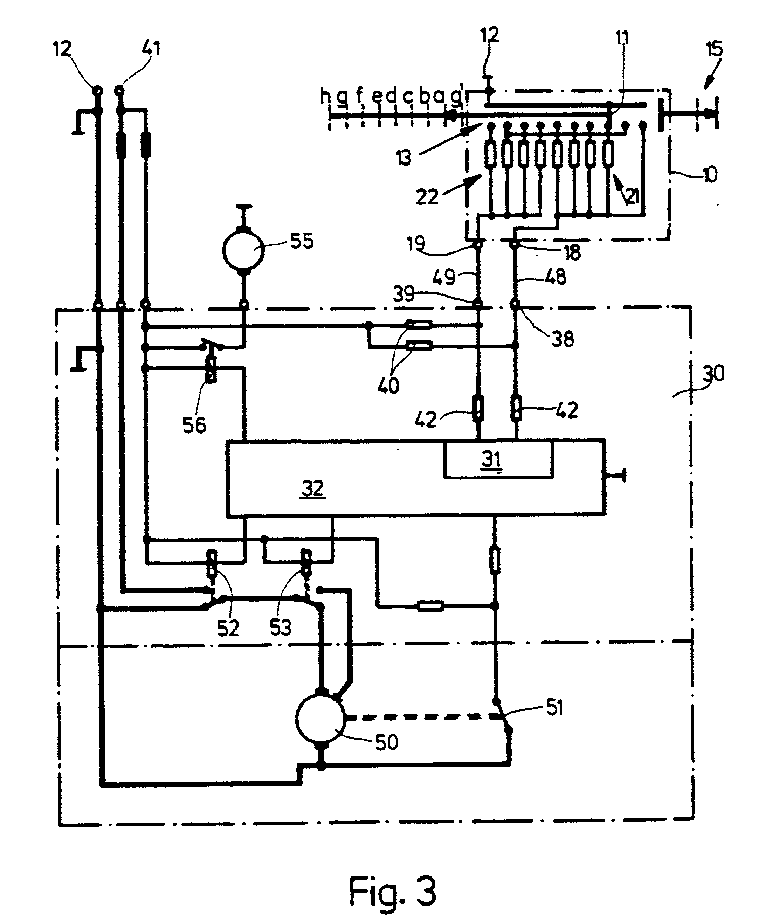

Bei dem Ausführungsbeispiel nach Fig. 3 sind wiederum auf jeder Signalübertragungsstrecke sechs unterschiedliche Spannungspegel übertragbar und von nachgeschalteten komparatoren überwachbar, doch sollen dabei zwecks Einsparung von Signalübertragungsstrecken vier unterschiedliche Spannungspegel unterschiedlichen Betriebsarten zugeordnet sein, während lediglich zwei andere Spannungspegel innerhalb der Zusatzdetektionsbereiche liegen. Man erkennt dies in der Zeichnung darar, daß jeweils vier Festkontakte 13 über zugeordnete Widerstände 21,22 mit einem Ausgang 18 bzw. 19 verbunder. sind. Diese Widerstände sind dabei so festgelegt, daß in der vorgesehenen Betriebsarten am Eingang 38 bzw. 39 des Programmgebers 30 20%, 40%, 60% oder 80% der Versorgungsspannung anliegen. Folglich sind bei dieser Ausführung nur zwei Zusatzdetektionsbereiche Dd, Df für spannungspegel von 0% oder 100% der Versorgungsspannung möglich. Bei dieser Ausführung fehlen die Miderstände 25, über die bei der Ausführung nach Fig. 1 der Spannungspegel bei offenem Schalter festgelegt wird. Folglich ist bei der Ausführung nach Fig. 3 derselbe Spannungspegel meßbar, wenn sich die Schaltbrücke 11 zwischen zwei Schaltstellungen befindet oder wenn die Schaltübertragungsstrecke 48, 49 unterbrochen ist oder mit dem positiven Pol 41 der Spannungsquelle kurzgeschlossen ist. Es ist aber leicht eine Unterscheidung der beiden Zwtände möglich, denn beim Umschalten des Betriebsschalters liegt dieses Signal nur kurzzeitig an, bei einer unterbrochenen Leitung oder einem Kurzschluß ist dieses Siganl aber über einen längeren Zeitraum meßbar. Folglich wird man den Programmgeber so ausbilden, daß auch die Zeitdauer eines innerhalb dieses Zusatzdetektionsbereiches Df liegenden Schaltsignales ausgewertet wird und in Abhängigkeit von dieser Zeitdauer dann unterschiedliche Steuersignale ausgelöst werden. Liegt dieses Schaltsignal nur verhältnismäßig kurzzeitig an, soll die bisherige Betriebsart beibehalten werden. Bei einem längeren Schaltimpuls innerhalb dieses Zusatzdetektionsbereiches Df soll dagegen die Anlage abgeschaltet werden.

Außerdem erkennt man in Fig. 3, daß bei Betätigung der Waschtaste 15 am Ausgang 18 ein Spannungspegel meßbar ist, der dem Spannungspegel bei einem Kurzschluß mit dem einem Pol 12 der Spannungsquelle entspricht. Da man davon ausgehen kann, daß über diese Waschtaste 15 der Waschpumpenmotor 55 jeweils nur kurzzeitig angesteuert wird, kann man hier dasselbe Prinzip einer zusätzlichen Zeitdauerüberwachung des Schaltsignales anwenden. Ist die Zeitdauer des Schaltsignales innerhalb dieses Zusatzdetektionsbereiches Dd, der für den Kurzschlußfall vorgesehen ist, kurz, soll also die Betriebsart "Waschen" eingeschaltet werden. Ist aie Zeitdauer dagegen lang, wird man das System abschalten. Auch bei Ausführung nach Fig. 3 hat also der Detektor neben den Detektionsbereichen für die einzelnen unterschiedlichen Betriebsarten zwei zusätzliche Detektionsbereiche für Schaltignale, die von den Schaltsignalen in den Betriebsschaltungen des Betriebsschalters abweichen. Damit ist auch bei dieser Ausführung eine ausreichende Betriebssicherheit gewährleistet. Zusätzlich hat diese Ausführung noch den Vorteil einer geringeren Anzahl von Leitungen zwischen dem Betriebsschalter und dem Programmgeber.

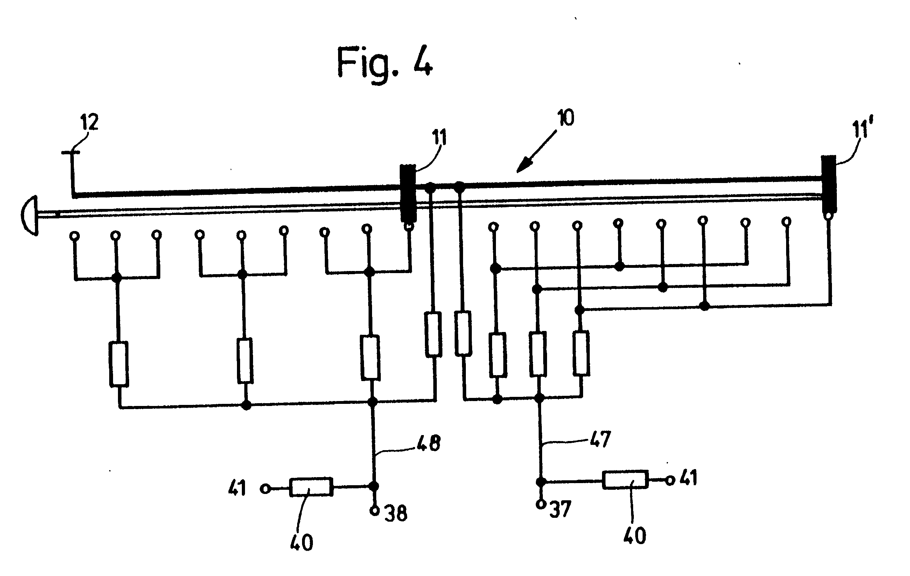

In Fig. 4 ist nun noch eine Ausführung dargestellt, bei dem der Betriebsschalter 10 zwei Schaltbrücken 11 und 11' aufweist, die gemeinsam verstellt werden und dann über die Widerstände jeweils unterschiedliche Spannungspegel auf die beiden Schaltsignalübertragungsstrecken 47 und 48 aufschalten. Die dem Schalter zugeordneten Widerstände können dabei so gewählt werden, daß über die Schaltbrücke 11 ausgehend von der gezeichneten Ruhestellung bei einer Verstellung nach links nacheinander Spannungspegel von 40%, 40%, 40%, 60%, 60%, 60%, 80%, 80% und 80% der Versorgungsspannung auf die Schaltsignalübertragungsstrecke 48 aufgeschaltet werden, während zugleich über die Schaltbrücke 11' auf die Schaltsignalübertragungsstrecke 47 Spannungspegel von 40%, 60%, 80%, 40%, 40%, 80%, 40%, 60%, 80%, der Versorgungsspannung aufgeschaltet werden. Bei einem Übergang von einer Schaltstellung in die nachfolgende ist auf beiden Schaltsignalübertragungsstrecken ein Spannungspegel von 20% der Versorgungsspannung meßbar.

Der Detektor legt aufgrund der Spannungspegel an seinen Eingängen 37,38 die Betriebsart für einen Verbraucher fest. Liegt an einem Eingang 38 also ein Spannungspegel von 40% und am anderen Eingang 37 ein Spannungspegel von 40% an, soll beispielsweise ein Intervallbetrieb eingestellt werden. Liegt an beiden Eingängen 37 und 38 aber ein Spannungspegel von 80% der Versorgungsspannung an, soll Dauerbetrieb mit hoher Wischgeschwindigkeit eingestellt werden. Der Detektor ermittelt also die Betriebsart aus mehreren gleichzeitig anliegenden Spannungspegeln, deren Höhe von der Schaltstellung des Betriebsschalters abhängt.

Diese Ausführung verdeutlicht also, daß man mit nur zwei Schaltsignalübertragungsstrecken neun unterschiedliche Betriebsarten oder Schaltstellungen des Betriebsschalters und weitere zusätzliche Schaltsignale, die bei Fehlern auftreten, erkennen kann.

Die vorliegende Erfindung wurde anhand eines Ausführungsbeispieles erläutert, das sich auf eine Scheibenreinigungsanlage für Kraftfahrzeuge bezieht. Natürlich können die Grundgedanken auch dann angewendet werden, wenn andere Verbraucher in einem Kraftfahrzeug gesteuert werden sollen. Bei den beschriebenen Ausführungsbeispielen sind jeweils mehrere Leitungen zwischen dem Betriebsschalter und dem Programmgeber vorgesehen. Das Prinzip der Erfindung ist natürlich auch dann anwendbar, wenn über eine einzige Leitung alle Schaltsignale des Betriebsschalters übertragen werden sollen. Das Prinzip der Erfindung wurde erläutert anhand von Beispielen, bei denen sich die Schaltsignale durch unterschiedliche Spannungspegel unterscheiden. Der Grundgedanke ist aber auch dann mit Vorteil anwendbar, wenn sich die Schaltsignale in anderen Kriterien, beispielsweise hinsichtlich der Frequenz oder der Impulsdauer unterscheiden, Auch bei einer digitalen Codierung der vom Betriebsschalter ausgelösten Schaltsignale kann der Grundgedanke der Erfindung verwirklicht werden, obwohl dort beispielsweise bei Verwendung eines Gray-Codes das Problem eines undefinierten Schaltsignales beim Umschalten des Betriebsschalters von einer Stellung in die andere Stellung nicht auftritt. Bei den Ausführungsbeispielen liegt die Schaltbrücke des Betriebsschalters einseitig immer auf Masse, also an dem Pol der Spannungsquelle, an den auch die Karosserie des Kraftfahrzeuges angeschlossen ist, Prinzipiell könnte die Schaltbrücke auch mit dem positiven Pol der Spannungsquelle verbunden sein, doch müßten dann für einen Kurzschluß der Schaltsignalübertragungsstrecke gegen Masse die verhältnismäßig niederohmigen Widerstände im Betriebsschalter eine hohe Verlustleistung aushalten können.

Schließlich soll noch darauf hingewiesen werden, daß die bei den genannten Störfällen ausgelösten Steuersignale in unterschiedlicher Art und Weise ausgewertet werden können. Man kann das ganze System abschalten oder aber auch nur die Schatsignalübertragungsstrecke nicht mehr abfragen, auf der das einen Fehler charakterisierende Schaltsignal gemessen wurde. Natürlich könnte man einen Fehler auch akustisch oder optisch anzeigen und es der Entscheidung des Benutzers überlassen, welche Reaktionen auf einer. bestimmten Fehler erforderlich sind.

Damit bei dieser analogen Meßwertverarbeitung Spannungsschwankungen das Meßergebnis nicht verfälschen, wird in in den meisten Fällen eine stabilisierte Spannungsquelle verwenden oder die Widerstände mit Konstantstrom speisen. Bei einer besonders einfachen Ausführung kann man aber auch die Widerstände und die Komparatoren direkt an die Batterie eines Fahrzeugs anschließen. Bei Spannungsänderungen ändert sich dann sowohl der auszuwertende Spannungspegel als auch der Detektionsbereich eines komparators, ohne daß sich das nachteilig auf die Auswertung auswirkt, sofern diese Detektionsbereiche weit genug auseinanderliegen.

Das gesamte System wird man vorzugsweise in integrierter Technik, ggf. unter Verwendung entsprechend programmierter Mikroprozessoren oder Mikrocomputer. oder Kunden-IC aufbauen.

## Patentansprüche

1. Schaltanordnung für wenigstens einen elektrischen Verbraucher eines Kraftfahrzeuges, insbesondere für eine Scheibenreinigungsanlage, mit einem zur Festlegung unterschiedlicher Betriebsarten eines oder mehrerer Verbraucher in mehere Betriebsschaltstellungen umstellbaren Betriebsschalter (10) sowie einem Programmgeber (30) mit einem Detektor (31), der auf die unterschiedlichen Schaltsignale des Betriebsschalters anspricht und bei einem innerhalb eines bestimmten Detektionsbereiches liegenden Schaltsignal eine zugeordnete Betriebsart für den oder die Verbraucher festlegt, wobei die Anzahl der Schaltsignalübertragungsstrecken zwischen Betriebsschalter (10) und Detektor (31) kleiner ist als die Anzahl der möglichen Betriebsschaltstellungen des Betriebsschalters, dadurch gekennzeichnet, daß der Detektor (31) neben den Detektionsbereichen (Da, Db, Dc) für die einzelnen unterschiedlichen Betriebsarten wenigstens einen zusätzlichen Detektionsbereich (Dd, De, Df) für ein Schaltsignal aufweist, das von den Schaltsignalen in den Betriebsschaltstellungen des Betriebsschalters abweicht.

2. Schaltanordnung nach Anspruch 1, dadurch gekennzeichnet, daß über den Betriebsschalter (10) in den einzelnen Betriebsschaltstellungen unterschiedliche Spannungspegel auf wenigstens einer Schaltsignalübertragungsstrecke (47,48,49) festlegbar sind, denen entsprechende Detektionsbereiche (Da, Db, Dc) des Detektors (31) zugeordnet sind.

3. Schaltanordnung nach Anspruch 2, dadurch gekennzeichnet, daß während des Umschaltens des Betriebsschalters (10) von einer Betriebsschaltstellung in eine andere auf die Schaltsignalübertragungsstecke (47,48,49) ein Spannungspegel aufgeschaltet wird, der von den Spannungspegeln in den Betriebsschaltstellungen abweicht, und daß diesem Spannungspegel ein erster Zusatzdetektionsbereich (De) zugeordnet ist.

4. Schaltanordnung nach Anspruch 3, dadurch gekennzeichnet, daß bei einem Schaltsignal innerhalb dieses ersten Zusatzdetektionsbereiches (De) die bisher eingestellte Betriebsart wenigstens für eine definierte Zeitspanne beibehalten wird.

5. Schaltanordnung nach wenigstens einem der vorhergehenden Ansprüche, dadurch gekennzeichnet, daß bei einem Kurzschluß einer Signalübertragungsstrecke (47, 48, 49) mit einem Pol (12, 41) der den Verbraucher speisenden Spannungsquelle auf der Schaltsignalübertragungsstrecke (47, 48, 49) ein Spannungspegel anliegt, der von den Spannungspegeln in den Betriebsschaltstellungen abweicht, und daß diesem Spannungspegel wenigstens ein weiterer Zwatzdetektionsbereich (Dd, Df) zugeordnet ist.

6. Schaltanordnung nach Anspruch 5, dadurch gekennzeichnet, daß bei einem Kurzschluß einer Schaltsignalübertragungsstrecke (47, 48, 49) mit dem positiven Pol (41) der Spannungsquelle der Spannungspegel innerhalb eines zweiten Zusatzdetektionsbereiches (Df), bei einem Kurzschluß mit dem negativen Pol (12) der Spannungsquelle der Spannungspegel aber innerhalb eines dritten Zusatzdetektionsbereiches (Dd) liegt.

7. Schaltanordnung nach wenigstens einem der vorhergehenden Ansprüche, dadurch gekennzeichnet, daß bei einer unterbrochenen Schaltsignalübertragungsstrecke (47,48,49) der Spannungspegel von denSpannungspegeln in den Betriebsschaltstflungen abweicht und diesem Spannungspegel ein weiterer Zusatzdetektionsbereich (Df) zugeordnet ist.

8. Schaltanordnung nach Anspruch 6 und 7, dadurch gekennzeichnet, daß der für einen Kurzschluß vorgesehene Zusatzdetektionsbereich (Df) mit demweiteren Zusatzdetektionsbereich (Df) für den Spannungspegel übereinstimmt, der bei unterbrochener Schaltsignalübertragungsstrecke (47,48, 49) vorliegt.

9. Schaltanordnung nach einem der Ansprüche 5 bis 8, dadurch gekennzeichnet, daß bei einem Schaltsignal innerhalb des zweiten oder dritten Zusatzdetektionsbereiches (Dd, Df) die Spannungsversorgung für alle Verbraucher (50,55) sofort oder über ein Zeitglied (63) verzögert abgeschaltet wird.

10. Schaltanordnung nach wenigstens einem der vorhergehenden Ansprüche 5 bis 8, dadurch gekennzeichnet, daß bei einem Schaltsignal innerhalb des zweiten oder dritten Zusatzdetektionsbereiches (Dd, Df) wenigstens ein Verbraucher und/oder eine Betriebsart eines Verbrauchers abgeschaltet wird.

11. Schaltanordnung nach wenigstens einem der vorhergehenden Ansprüche, dadurch gekennzeichnet, daß der Betriebsschalter (10) eine in mehrere Betriebsschaltstellungen umstellbare Schaltbrücke (11) aufweist, die an einen ersten Pol (12) der Spannungsquelle angeschlossen ist und in den einzelnen Betriebsschaltstellungen außerdem auf jeweils einem von mehreren Festkontakten (13) aufliegt, daß mehrere Festkontakte (13) jeweils über unterschiedliche Widerstände (20a .. c, 21a .. c, 22a .. c) mit einem Ausgang (17,18,19) des Betriebsschalters (10) verbunden sind, daß diese Ausgänge (17,18,19) über jeweils eine Schaltsignalübertragungsstecke (47,48, 49) mit jeweils einem Eingang (37,38,39) des Programmgebers (30) verbunden sind, daß diese Eingänge (37,38,39) jeweils über einen Widerstand (40) mit dem zweiten Pol (41) der Spannungsquelle verbunden sind, und daß die Ausgänge (17,18;19) des Betriebsschalters über jeweils einen Widerstand (25) mit dem ersten Pol (12) verbunden sind.

12. Schaltanordnung nach Anspruch 11, dadurch gekennzeichnet, daß die einzelnen Widerstände derart festgelegt sind, daß bei einem Kurzschluß einer Schaltsignalübertragungsstrecke (47,48,49) mit dem ersten Pol (12) der Spannungsquelle am Eingang des Programmgebers (30) ein Spannungspegel von 0 % bezogen auf die Versorgungsspannung, bei einem Kurzschluß mit dem zweiten Pol (41) der Spannungsquelle ein Spannungspegel von 100%, während des Umschaltens von einer Betriebsschaltstellung in eine andere ein Spannungspegel von 20% und in den Betriebsschaltstellungen ein Spannungspegel größer 20% und kleiner 100% meßbar ist.

13. Schaltanordnung nach Anspruch 11 oder 12, dadurch gekennzeichnet, daß der erste Pol (12) der Spannungsquelle auch an die Karosserie des Kraftfahrzeuges angeschlossen ist.

14. Schaltanordnung nach wenigstens einem der vorhergehenden Ansprüche, dadurch gennzeichnet, daß der Detektor (31) auch die Zeitdauer des innerhalb eines Zusatzdetektionsbereiches (De) liegenden Schaltsignales auswertet und in Abhängigkeit von dieser Zeitdauer unterschiedliche Steuersignale auslöst.

15. Schaltanordnung nach Anspruch 14, dadurch gekennzeichnet, daß während des Umschaltens des Betriebsschalters (10) von einer Betriebsschaltstellung in eine andere und/oder bei unterbrochener Schaltsignalübertragungsstrecke (48,49) ein Spannungspegel meßbar ist, der von den Spannungspegeln in den Betriebsschaltstellungen abweicht, daß diesem Spannungspegel ein erster Zusatzdetektionsbereich zugeordnet ist und daß bei einem kurzzeitigen Spannungspegel innerhalb dieses ersten Zusatzdetektionsbereiches die bisherige Betriebsart beibehalten, bei einem länger anhaltenden Spannungspegel aber alle Verbraucher abgeschaltet werden.

16. Schaltanordnung nach Anspruch 14, dadurch gekennzeichnet, daß der Spannungspegel bei einem Kurzschluß der Schaltsignalübertragungsstrecke (48,49) mit einem Pol (12) der Spannungsquelle dem Spannungspegel beim Einschalten eines bestimmten, nur kurzzeitig ansteuerbaren Verbrauchers (55) entspricht, daß diesem Spannungspegel ein zweiter Zusatzdetektionsbereich zugeordnet ist und daß bei einem kurzzeitigen Spannungspegel innerhalb dieses zweiten Zusatzdetektionsbereiches der bestimmte Verbraucher (55) eingeschaltet, bei einem länger dauernden Spannungspegel aber alle Verbraucher abgeschaltet werden.

## Claims

1. A circuit arrangement for at least one electric load of a motor vehicle, especially for a windscreen cleaning system, comprising an operating switch (10) which may be changed over into several operating positions in order to determine different modes of operation and a programming unit (30) with a detector (31) responding to the different switching signals of the operating switch and, when the switching signal lies within a particular range of detection, determines am associated mode of operation for the load or the loads, wherein the number of switching signal transmission paths between operating switch and detector is smaller than the number of possible operating positions of the operating switch, characterised in that, in addition to the ranges of detection (Da, Db, Dc) for the various modes of operation, the detector (31) has at least one additional range of detection (Dd, De, Df) for a switching signal differing from the switching signal in the operating positions of the operating switch.

2. A circuit arrangement according to claim 1, characterised in that on at least one switching signal transmission path (47, 48, 49) different voltage levels may be determined in the various operating positions via the operating switch (10), to which voltage levels are assigned corresponding ranges of detection (Da, Db, Dc) of the detector (31).

3. A circuit arrangement according to claim 2, characterised in that during the changeover of the operating switch (10) from one operating position into the other a voltage level is connected to the switching signal transmission path,(47, 48, 49), which voltage level differs from the voltage levels in the operating positions and that a first additional range of, detection (De) is associated with this voltage level.

4. A circuit arrangement according to claim 3, characterised in that with a switching signal within this first additional range of detection (De) the current mode of operation is at least retained for a defined period of time.

5. A circuit arrangement according to at least any one of the preceding claims, characterised in that upon a short-circuit of a signal transmission path (47, 48, 49) with one pole (12, 41) of the voltage source supplying the load a voltage level is applied to the switching signal transmission path (47, 48, 49), which differs from the voltage levels in the operating positions, and that at least one further additional range of detection (Dd, Df) is associated with this voltage level.

6. A circuit arrangement according to claim 5, characterised in that that upon a short-circuit of a switching signal transmission path (47, 48, 49) with the positive pole (41) of the voltage source the voltage level lies within a second additional range of detection (Df), but the voltage level lies within a third additional range of detection (Dd) when short-circuited with the negative pole (12) of the voltage source

7. A circuit arrangement according to at least any one of the preceding claims, characterised in that, when the switching signal transmission path (47, 48, 49) is interrupted, the voltage level differs from the voltage levels in the operating positions and that a further additional range of detection (Df) is associated with the said voltage level.

8. A circuit arrangement according to claims 6 and 7, characterised in that the additional range of detection (Df) provided for a short-circuit is equal to the further additional range of detection (Df) for the voltage level available, when the switching signal transmission path (47, 48, 49) is interrupted.

9. A circuit arrangement according to any one of claims 5 to 8, characterised in that upon a switching signal within the second or third range of detection (Dd, Df) the voltage supply for all loads (50, 55) is switched off immediately or, via a timing element (63), retardedly.

10. A circuit arrangement according to at least any one of claims 5 to 8, characterised in that upon a switching signal within a second or third additional range of detection (Dd, Df) at least one load and/or one mode of operation of a load is switched off.

11. A circuit arrangement according to at least any one of the preceding claims, characterised in that the operating switch (10) has a contact bridge (11) which may be changed over into several operating positions and is connected with a first pole (12) of a voltage source and, in the various operating positions, in addition also rests upon one of several stationary contacts (13), in that several stationary contacts (13) are connected with one output (17, 18, 19) of the operating switch (10) via resistors with different resistance values each (20 .. c, 21a .. c, 22a .. c), in that each of these outputs (17, 18, 19) is connected with one input (37, 38, 39) each of the programming unit (30) via a switching signal transmission path (47, 48, 49), in that these input (37, 38, 39) are connected with the second pole (41) of the voltage source via a resistor (40) each, and in that the outputs (17, 18, 19) of the operating switch are connected with the first pole (12) via a resistor (25) each.

12. A circuit arrangement according to claim 11, characterised in that the various resistors are selected in such a way that upon a short-circuit of a switching signal transmission path (47, 48, 49) with the first pole (12) of a voltage source a voltage level of 0 % related to the supply voltage may be measured at the input of the programming unit (30), upon a short-circuit with the second pole (41) of a voltage source a voltage level of 100 %, during the changeover from one operating position into another one a voltage level of 20 % and in the operating positions a voltage level greater than 20 % and smaller than 100 %.

13. A circuit arrangement according to claim 11 or 12, characterised in that the first pole (12) of a voltage source is also connected with the body of the motor vehicle.

14. A circuit arrangement according to at least any one of the preceding claims, characterised in that the detector (31) also evaluates the duration of the switching signal lying within the additional range of detection (De) and, in dependence on this duration, releases different control signals.

15. A circuit arrangement according to claim 14, characterised in that during changeover of the operating switch (10) from one operating position into another one and/or when the switching signal transmission path (48, 49) is interrupted a voltage level differing from the voltage levels in the operating positions may be measured, in that with this voltage level is associated a first additional range of detection and that upon a short-time voltage level within the said first additional range of detection the current mode of operation is retained, but upon a longer lasting voltage level all loads are switched off.

16. A circuit arrangement according to claim 14, characterised in that the voltage level, when the switching signal transmission path (48, 49) is short-circuited with one pole (12) of the voltage source, corresponds to the voltage level occuring with switching-on of a particular load (55) which may only be controlled for a short time, in that with this voltage level is associated a second additional range of detection and in that upon a short-time voltage level within this second additional range of detection the particular load (55) is switched on, but in the case of a longer lasting voltage level all loads are switched off.

## Revendications

1. Circuit pour au moins un consommateur électrique d'un véhicule à moteur, en particulier pour un dispositif de nettoyage de vitre, comportant un commutateur de fonctionnement (10) réglable dans plusieurs positions de commutation pour déterminer les différents modes de fonctionnement d'un ou plusieurs consommateurs ainsi qu'un progrmmateur (30) muni d'un détecteur (31) réagissant aux différents signaux du commutateur de fonctionnement et déterminant un mode de fonctionnement associé pour le ou les consommateurs en présence d'un signal de commutation se situant à l'intérieur d'un domaine de détection défini, où le nombre des lignes de transmission du signal de commutation entre le commutateur de fonctionnement (10) et le détecteur (31) est plus petit que le nombre des positions de commutation possibles du commutateur de fonctionnement, caractérisé en ce que le détecteur (31) présente, en plus des domaines de détecteur (Da, Db, Dc) pour les différents modes de fonctionnement distincts, au moins un domaine de détection supplémentaire (Dd, De, Df) pour un signal de commutation s'écartant des signaux de commutation dans les positions de commutation du commutateur de fonctionnement.

2. Circuit suivant la revendication 1, caractérisé en ce que différents niveaux de tension sur au moins une ligne de transmission du signal de commutation (47, 48, 49) peuvent être déterminées par l'intermédiaire du commutateur de fonctionnement dans les positions de commutation distinctes, auxquels sont associés des domaines de détection appropriés (Da, Db, Dc) du détecteur (31).

3. Circuit suivant la revendication 2, caractérisé en ce que, pendant le passage du commutateur de fonctionnement (10) d'une position de commutation de fonctionnement à une autre, un niveau de tension est commuté sur la ligne de transmission du signal de commutation (47, 48, 49), s'écartant des niveaux de tension dans les positions de commutation de fonctionnement, et que ce niveau de tension est associé à un premier domaine de détection supplémentaire (De).

4. Circuit suivant la revendication 3, caractérisé en ce qu'en présence d'un signal de commutation à l'intérieur de ce premier domaine de détection supplémentaire (De), le mode de fonctionnement fixé jusqu'ici est maintenu au moins pendant un laps de temps défini.

5. Circuit suivant au moins l'une des revendications précédentes, caractérisé en ce qu'en présence d'un court-circuit d'une ligne de transmission du signal (47, 48, 49) avec un pôle (12, 41) de la source de tension alimentant le consommateur, un niveau de tension est appliqué sur la ligne de transmission du signal de commutation (47, 48, 49), s'écartant des niveaux de tension dans les positions de commutation de fonctionnement et que ce niveau de tension est associé à au moins un autre domaine de détection supplémentaire (Dd, Df).

6. Circuit suivant la revendication 5, caractérisé en ce qu'en présence d'un court-circuit d'une ligne de transmission du signal de commutation (47, 48, 49) avec le pôle positif (41) de la source de tension, le niveau de tension se trouve à l'intérieur d'un deuxième domaine de détection supplémentaire (Df), et en ce qu'en présence d'un court-circuit avec le pôle négatif (12) de la source de tension le niveau de tension se trouve alors à l'intérieur d'un troisième domaine de détection supplémentaire (Dd).

7. Circuit suivant au moins l'une des revendications précédentes, caractérisé en ce qu'en présence d'une ligne de transmission du signal de commutation (47, 48, 49) interrompue, le niveau de tension s'écarte du niveau de tension dans les positions de commutation de fonctionnement et qu'un autre domaine de détection supplémentaire (Df) est associé à ce niveau de tension.

8. Circuit suivant les revendications 6 et 7, caractérisé en ce que le domaine de détection supplémentaire (Df) prévu pour un court-circuit concorde avec l'autre domaine de détection supplémantaire, existant en présence d'une ligne de transmission du signal de commutation interrompue.

9. Circuit suivant les revendications 5 à 8, caractérisé en ce qu'en présence d'un signal de commutation à l'intérieur du deuxième ou du troisième domaine de détection supplémentaire (Dd, Df) la tension d'alimentation pour tous les consommateurs (50, 55) est débranchée immédiatement ou après le délai d'un circuit de temporisation.

10. Circuit suivant au moins l'une des revendications 5 à 8, caractérisé en ce qu'en présence d'un signal de commutation à l'intérieur du deuxième ou du troisième domaine de détection supplémentaire (Dd, Df), au moins un consommateur et/ou un mode de fonctionnement d'un consommateur est mis hors circuit.

11. Circuit suivant au moins l'une des revendications précédentes, caractérisé en ce que le commutateur de fonctionnement (10) présente un pont de commutation (11) ajustable dans plusieurs positions de commutation de fonctionnement, connecté au premier pôle (12) de la source de tension et de plus relié, selon le cas, à l'un des plusieurs contacts fixes (13), dans les positions de commutation de fonctionnement distinctes, en ce que plusieurs contacts fixes (13), selon le cas, sont reliés à une sortie (17, 18, 19) du commutateur de fonctionnement (10), à travers différentes résistances (20a..c, 21a..c, 22a..c), en ce que ces sorties (17, 18, 19) sont reliées à une entrée (37, 38, 39), selon le cas du programmateur (30) à travers une ligne de transmission du signal de commutation (47, 48, 49) selon le cas, en ce que ces entrées (37, 38, 39) sont reliées, selon le cas, au deuxième pôle (41) de la source de tension à travers une résistance (40) et en ce que les sorties (17, 18, 19) du commutateur de fonctionnement sont reliées, selon le cas, au premier pôle (12) à travers une résistance (25).

12. Circuit suivant la revendication 11, caractérisé en ce que les résistances distinctes sont déterminées de telle façon qu'en présence d'un court-circuit d'une ligne de transmission du signal de commutation (47, 48, 49) avec le premier pôle (12) de la source de tension, un niveau de tension de 0 % de la tension d'alimentation est mesurable à l'entrée du programmateur (30), qu'en présence d'un court-circuit avec le deuxième pôle (41) de la source de tension, on peut mesurer un niveau de tension de 100 %, pendant le passage d'une position de commutation de fonctionnement à une autre, on peut mesurer un niveau de 20 % et dans les positions de commutation de fonctionnement, on peut mesurer un niveau de tension plus grande que 20 % et plus petit que 100 %.

13. Circuit suivant les revendications 11 et 12, caractérisé en ce que le premier pôle (12) de la source de tension est aussi connecté à la carosserie du véhicule à moteur.

14. Circuit suivant au moins l'une des revendications précédentes, caractérisé en ce que le détecteur (31) exploite aussi la durée d'un signal de commutation se situant à l'intérieur d'un domaine de détection supplémentaire (De) et en fonction de cette durée déclenche différents signaux de commande.

15. Circuit suivant la revendication 14, caractérisé en ce que, pendant le passage du commutateur de fonctionnement (10) d'une position de commutation de fonctionnement à une autre et/ou en présence d'une ligne de transmission du signal de commutation (48, 49) interrompue, un niveau de tension est mesurable, s'écartant des niveaux de tension dans les positions de commutation de fonctionnement, en ce qu'à ce niveau de tension est associé un premier domaine de détection supplémentaire et en ce qu'en présence d'un niveau de tension, d'une durée courte, à l'intérieur de ce premier domaine de détection supplémentaire, le mode de fonctionnement fixé jusqu'ici est maintenu et en ce qu'en présence d'un niveau de tension d'une durée plus longue, tous les commutateurs sont mis hors circuit.

16. Circuit suivant la revendication 14, caractérisé en ce que le niveau de tension, en présence d'un court-circuit de la ligne de transmission du signal de commutation (48, 49) avec un pôle (12) de la source d'alimentation, correspond au niveau de tension lors de la mise en circuit d'un commutateur défini (55) commandable uniquement pendant des temps courts, en ce qu'un deuxième domaine de détection supplémentaire est associé à ce niveau de tension de courte durée à l'intérieur de ce deuxième domaine de détection supplémentaire, le consommateur défini (55) est mis en circuit, mais qu'en présence d'un niveau de tension de plus longue durée tous les consommateurs sont mis hors circuit.

**Fig. 1**

Fig. 2

Fig. 3

Fig. 4